# EUROPEAN PATENT APPLICATION

(11) **EP 1 993 034 A1**
(43) Date of publication of application: **19.11.2008**
(21) Application number: 07108337.2
(22) Date of filing: 16.05.2007
(51) Int. Cl.: G06F 9/44, G05B 23/02, G05B 19/41

(54) **Building control module, controller, method, and computer program**

(71) Applicant: Tac AB, 213 75 Malmö (SE)
(72) Inventor: Davidsson, Anders, 212 22 Malmö (SE); Henriksson, Jan, 245 35 Staffanstorp (SE); Vennerstrand, Anders, 240 14 Veberöd (SE); Wendel, Kristian, 217 42 Malmö (SE); Björck, Sven, 237 34 Bjärred (SE)
(74) Representative: Milanov, Nina Vendela Maria

(57) **Abstract**

A building control module comprising a data structure arranged to define a control mechanism, and at least one of an input interface and an output interface is disclosed. The input interface is enabled to receive input signals from any of one or more input sets associated with at least one of a plurality of control objects. The output interface is enabled to provide output signals to any of one or more output sets associated with at least one of a plurality of control objects. The control mechanism is arranged to process input signals, and to output output signals to said output interface. A controller, a control system, a control method, and a computer program are also disclosed.

## Description

### Technical field

The present invention relates to a building control module, a controller, a method, and a computer program.

### Background of the invention

Controllers and control systems for heating, ventilation, and air conditioning (HVAC), security, lighting, asset management, or other facility management control are becoming more sophisticated and complex thanks to computer aided control and use of communication technologies. It is therefore a problem to manage these sophisticated and complex controllers and control systems.

### Summary of the invention

In view of the above, an objective of the invention is to solve or at least reduce the problems discussed above. In particular, an objective is to provide control of a plurality of control objects with an improved control mechanism structure.

In the following, control in relation to heating, ventilation, and air contitioning (HVAC), security, lighting, asset management, or other facility management control will be referred to as 'building controls'.

The present invention is based on the understanding that in building control, several control tasks, which each is associated to a control object and has its own inputs and outputs, can utilize a common control mechanism. The invention is further based on the understanding that, by using a common control mechanism, quality of the control mechanism can be improved without significant increase of effort and thus costs for the aggregate control tasks. Quality can also be improved by the fact that only the common control mechanism is designed or maintained, and thus is no control task overlooked, e.g. upon updating of the control mechanism.

According to a first aspect of the present invention, there is provided a building control module comprising a data structure arranged to define a control mechanism, and at least one of an input interface and and output interface, wherein said input interface is enabled to receive input signals from any of one or more input sets associated with at least one of a plurality of control objects, said output interface is enabled to provide output signals to any of one or more output sets associated with at least one of a plurality of control objects, and said control mechanism is arranged to process input signals to output signals to said output interface.

The output signals may comprise control signals for controlling a control object. The output signals may comprise a variable set. The input signals may comprise signals provided by a control object. The input signals may comprise a variable set.

At least one of said input signals may be internally generated. At least one of said output signals may be connected to said input interface to form an input signal.

The data structure may be enabled to be updated with regard to any of the group comprising: addition of input signals to said input interface; removal of input signals from said input interface; addition of output signals to said output interface; removal of output signals from said output interface; and edition of the control mechanism.

According to a second aspect of the present invention, there is provided a building control controller comprising a building control module according to the first aspect of the present invention; and a processor arranged to execute said data structure to control operation of said plurality of control objects by said control mechanism via said interfaces.

The controller may be arranged to add further building control modules, remove building control modules, and/or update building control modules according to the first aspect of the present invention.

The controller may comprise a multiplexer arranged to multiplex signals from said sets of inputs to said input interface of said building control module. The multiplexer may be controlled by said processor.

The controller may comprise a demultiplexer arranged to demultiplex an output signal from said output interface to said sets of outputs. The demultiplexer may be controlled by said processor.The control mechanism may be retrievable from a central building control module library. The central building control module library may comprise a building control module server. The building control module may be centrally adaptable in said central building control module library. The central building control module library may be hosted by said processor. The building control module retrievable from said central building control module library may be a software having a certificate uniquely associated to said building control module, said certificate ensuring properties of said building control module. The controller may further comprise means for confirming said building control module by means for verifying said certificate. At least one of said control objects may be a building control module according to the first aspect of the present invention.

According to a third aspect of the present invention, there is provided a building control system comprising a controller according to the second aspect of the present invention, and a plurality of control objects, wherein the controller is arranged to control the plurality of control objects.

The control system may comprise a central building control module library. The central building control module library may comprise a building control module server. The building control module may be centrally adaptable in said central building control module library. The building control module library may be hosted by a central building management centre of said building control system.

According to a fourth aspect of the present invention, there is provided a building control method comprising i) inputting through an input interface one of a plurality of sets of input signals, wherein each set is associated with one of a plurality of control objects; ii) processing said input signals by a control mechanism to provide output signals; iii) outputting said output signals through an output interface to one of a plurality of sets of output signals, wherein each set is associated with one of said control objects; and iv) performing steps i) to iii) for each of said plurality of control objects by said control mechanism.

The method may comprise multiplexing said sets of input signals to said input interface.

The method may comprise demultiplexing said output signals to said control objects.

The method may comprise retrieving said control mechanism from a central building control module library. The method may comprise centrally adapting said control mechanism in said central building control module library. The method may comprise hosting said central building control module library by said processor.

The method may comprise any of the actions comprised in a group comprising: adding input signals to said input interface; removing input signals from saidn input interface; adding output signals to said output interface; removing output signals from said output interface; and editing the control mechanism.

According to a fifth aspect of the present invention, there is provided a computer program comprising program code means adapted to perform the method according to the fourth aspect of the present invention when the program is executed by a processor.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

Other objectives, features and advantages of the present invention will appear from the following detailed disclosure, from the attached dependent claims as well as from the drawings.

### Brief description of the drawing

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 is a schematic illustration of a traditional control approach;
Fig. 2 is a schematic illustration of a control approach according to the present invention;
Fig. 3 is a block diagram illustrating a controller according to an embodiment of the present invention arranged to control a plurality of control objects;
Fig. 4 is a block diagram illustrating a controller according to an embodiment of the present invention arranged to control a plurality of control objects;
Fig. 5 is a block diagram illustrating a controller according to an embodiment of the present invention arranged to control a plurality of control objects;
Fig. 6 is a block diagram illustrating a controller according to an embodiment of the present invention arranged to control a plurality of control objects;
Fig. 7 is a flow chart illustrating a method according to an embodiment of the present invention;
Fig. 8 schematically illustrates optional actions according to embodiments of the present invention;
Fig. 9 is a block diagram illustrating a building control module being retrievable from a building control module library;
Fig. 10 is a block diagram illustrating a building control module being retrievable from a building control module library hosted by a processor; and
Fig. 11 illustrates a computer readable medium comprising a computer program for downloading into a controller for implementing an embodiment of the present invention.

### Detailed description of preferred embodiments

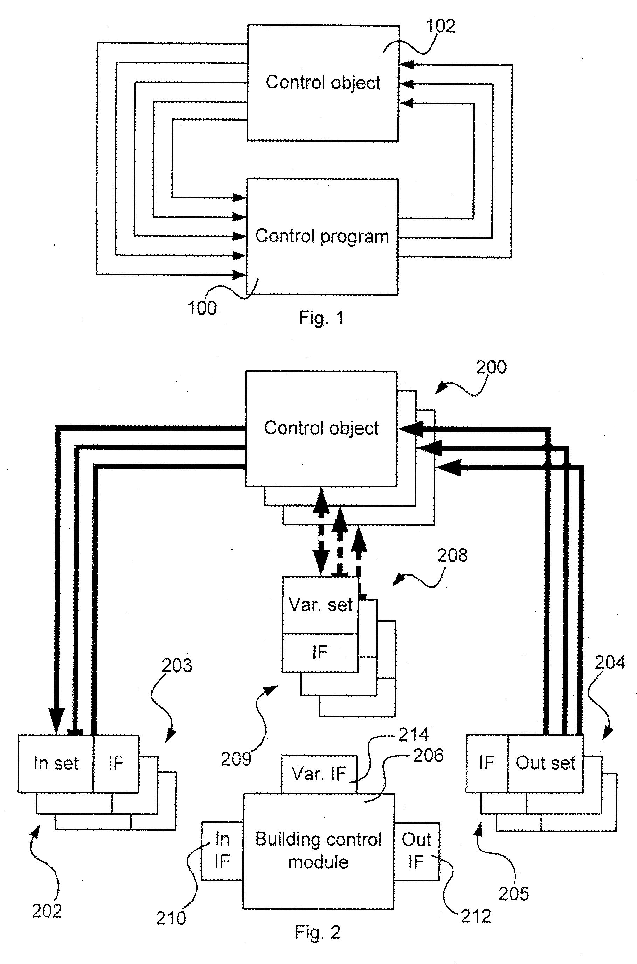

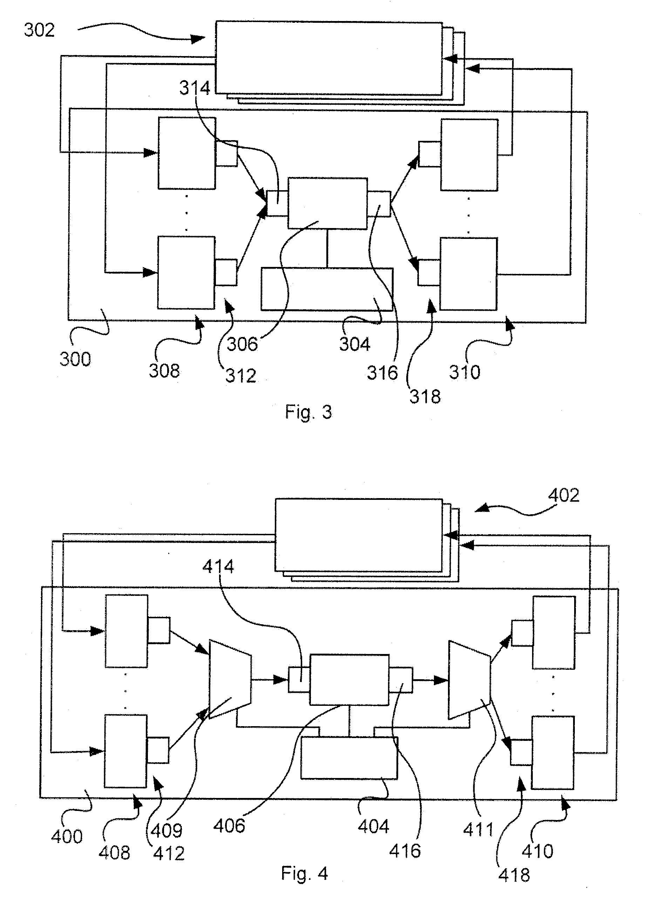

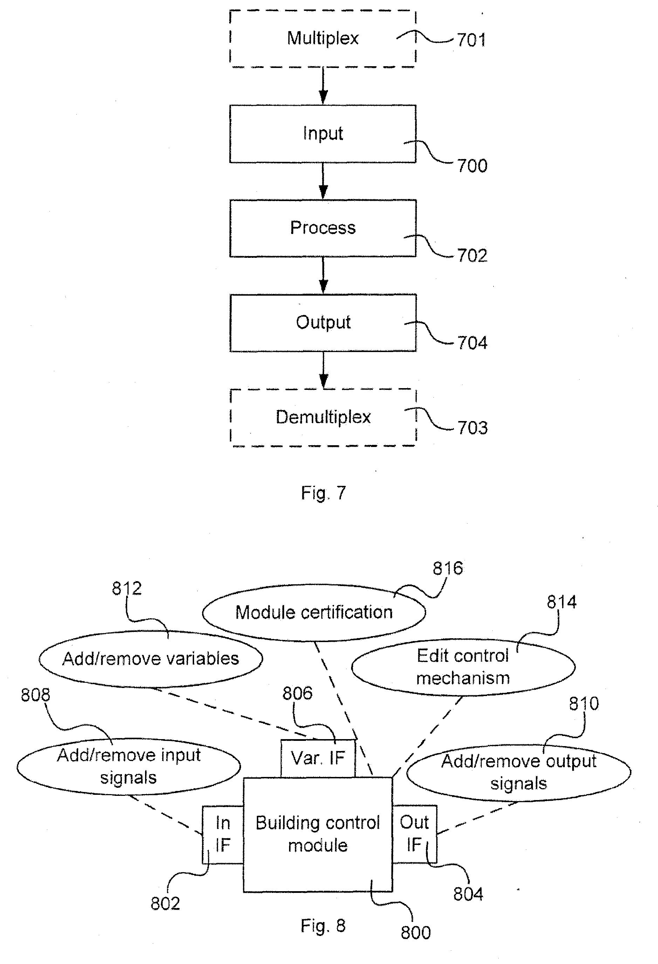

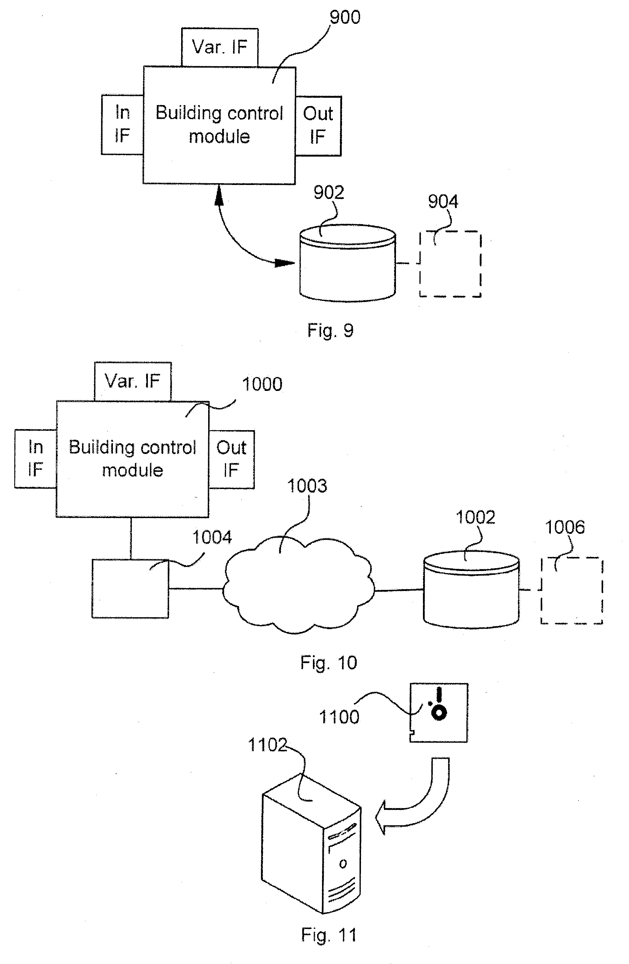

In the following disclosure, Figs 1 and 2 will be used as reference to explain the new approach according to the present invention, Figs 3 to 5 will be used as reference to explain different exemplary embodiments, Figs 7 and 8 will be used as reference to explain methods and actions performed, Figs 9 any 10 will be used as reference to explain retrieval of a building control module, and Fig. 11 will be used as reference to explain computer program implementation of the invention.

Fig. 1 schematically illustrates a traditional controller program 100 for controlling a control object 102. The controller program 100 has a dedicated design for the control object 102, such as signal inputs, control mechanism and its settings, and output signals. Thus, for each control object, another dedicated controller program is required. This implies that design, installation, and maintenance, especially for large control systems, become a cumbersome affair.

Fig. 2 schematically illustrates an approach to provision of control to a group of control objects 200, where each control object has signal sets 202, 204 for interaction with a building control module 206. Each control object can also have an associated variable set 208, which can be used by the control module 206. Each of the sets 202, 204, 208 have a signal interface 203, 205, 209 for interaction with the building control module 206 via signal interfaces 220, 212, 214 of the building control module 206. Thus, any of the control objects 200 are able to interact with the building control module 206. This implies that design, installation, and maintenance, especially for large control systems, become a much more handy affair.

Interfaces 203 of input sets 202 are designed to directly fit and interact with an input interface 220 of the building control module 206. The input signals from the different input sets 202, and thus from the different control objects 200, can be multiplexed to the building control module 206, or alternatively, the building control module 206 is easily multiplied, since it preferably is a data structure to be executed by a processor, in the processor to each perform control tasks for the plurality of control objects, respectively, This depends on processor structure, i.e. whether virtual or true parallelism is conducted. In any of these cases, it is the same data structure that is used for performing a control mechanism of the building control module 206.

Similarly, the interfaces 205 of output sets 204 are designed to fit directly and interact with an output interface 212 of the building control module 206. The output signals from the building control module 206 are provided on the output interface 212 to the output sets 204 via the interfaces 205. The output sets 204 are associated and in signal connection with respective of the control objects 200. Thus, control signals can be provided from the building control module 206 to control the control objects 200. It is to be noted that a control object can be another building control module, or the building control module 206 itself. The output signals from the output interface 212 can be demultiplexed to the output sets 204.

Further, variable sets 208 associated with the control objects 200 can also be provided, such that certain variables dedicated to each control object 200 can be shared between the control objects 200 and the building control module 206. In a similar way as demonstrated above for input and output signals, the variable sets 208 are provided with a variable set interface 209 arranged to interact with a variable interface 214 of the building control module. The variable set interface 209 and the variable interface 214 can be bi-directional. Thus, the input function of the variable interface 214, considered from the view of the building control module 206, can be considered as a part of the input interface 202, and the output function of the variable interface 214 can be considered as a part of the output interface 204.

The above disclosed approach implies that, if another control object is to be added, such as adding a room to be controlled, additional sets are created, and the new control object is then able to be controlled by the controller having the control module and by using the same control mechanism.

Fig. 3 is a block diagram illustrating a controller 300 arranged to control a plurality of control objects 302. The controller 300 comprises a processor 304 arranged to control operation of a building control module 306 comprising a control mechanism to control the plurality of control objects 302. The building control module 306 is a common structure that is selectively connected to a plurality of input sets 308, each being associated to one of the plurality of control objects 302, and to a plurality of output sets 310, each being associated to one of the plurality of control objects 302. Thus, the building control module 306 is virtually duplicated to perform the plurality of control tasks associated with the control objects 302. A mechanism for performing selection of connections is preferably part of the controller 300 and controlled by the processor 304.

In order to connect the signals of the input sets 308 to the building control module 306, each of the input sets are provided with a signal interface 312 arranged to interact with the common structure of the building control module 306, which therefore is provided with an input interface 314 arranged to interact with the signal interfaces 312. Similarity, the building control module 306 is provided with an output interface 316 arranged to interact with corresponding signal interfaces 318 of the output sets 310.

In the schematic illustration of the approach of the invention demonstrated with reference to Fig. 2, a variable interface and variable sets with signal interfaces were disclosed. In the embodiment disclosed with reference to Fig. 3, any variable interactions between the building control module 306 and the control objects 302 are assumed to be included in the input and/or output transactions performed via the input interface 314 and output interface 316, respectively.

Fig. 4 is a block diagram illustrating a controller 400 arranged to control a plurality of control objects 402. The controller 400 comprises a processor 404 arranged to control operation of a building control module 406 comprising a control mechanism to control the plurality of control objects 402. The building control module 406 is a common structure that is selectively connected to a plurality of input sets 408, each being associated to one of the plurality of control objects 402, via a signal interface 412 of each input set 408, a multiplexer 409 arranged to multiplex input signals from the input sets 408, and an input interface 414 to the control mechanism 406. The control mechanism 406 is further selectively connected to a plurality of output sets 410, each being associated to one of the plurality of control objects 402, via an output interface 416, a demultiplexer 411 arranged to demultiplex output signals from the output interface 416 of the control mechanism 406, and a signal interface 418 to the output sets 410. Thus, the control mechanism 406 is virtually duplicated to perform the plurality of control tasks associated with the control objects 402. Selection of connections is preferably controlled by the processor 404, which controls operation of the multiplexer 409 and the demultiplexer 411.

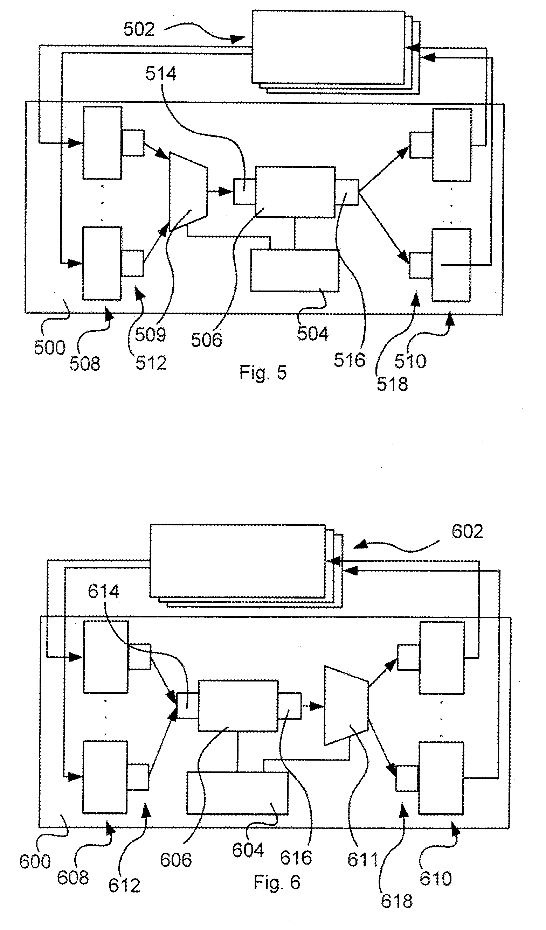

Fig. 5 is a block diagram illustrating a controller 500 arranged to control a plurality of control objects 502. The controller 500 comprises a processor 504 arranged to control operation of a building control module 506 comprising a control mechanism to control the plurality of control objects 502. The building control module 506 is a common structure that is selectively connected to a plurality of input sets 508, each being associated to one of the plurality of control objects 502, via a signal interface 512, a multiplexer 509 arranged to multiplex input signals from the signal interfaces 512 of the input sets 508, and an input interface 514 to the control mechanism 506. The control mechanism 506 is further selectively connected to a plurality of output sets 510, each being associated to one of the plurality of control objects 502, via an output interface 516 of the building control module 506, and a signal interface 518 at each of the output signal sets 510. Thus, the control mechanism 506 is virtually duplicated to perform the plurality of control tasks associated with the control objects 502. Selection of connections is preferably controlled by the processor 504, which controls operation of the multiplexer 509, and a mechanism for performing selection of output connections, which is preferably part of the controller 500.

Fig. 6 is a block diagram illustrating a controller 600 arranged to control a plurality of control objects 602. The controller 600 comprises a processor 604 arranged to control operation of a building control module 606 comprising a control mechanism to control the plurality of control objects 602. The building control module 606 is a common structure that is selectively connected to a plurality of input sets 608, each being associated to one of the plurality of control objects 602, via a signal interface 612 of each of the input sets 608, and an input interface 614. The control mechanism 606 is further selectively connected to a plurality of output sets 610, each being associated to one of the plurality of control objects 602, via an output interface 616, a demultiplexer 611 arranged to demultiplex output signals from the output interface 616 of the control mechanism 606, and a signal interface 618 of each of the output sets 610 to the output sets 610. Thus, the control mechanism 606 is virtually duplicated to perform the plurality of control tasks associated with the control objects 602. Selection of connections is preferably controlled by the processor 604, which controls operation of a mechanism for performing selection of input connections, which is preferably part of the controller 600, and operation of the the demultiplexer 611.

Fig. 7 is a flow chart illustrating a method according to an embodiment of the present invention. In an input step 700, a plurality of sets of input signals being associated with a plurality of control objects is input. The signals can for example be sensor values, states, etc. related to the control objects and for use in control of the control objects. In a processing step 702, the sets of input signals from each control object are independently processed by a building control module comprising a control mechanims, i.e. the control mechanism performs the actual control procedure and the building control module outputs the control signals via an output interface, based on the input set of input signals provided to an input interface of the building control module for each control object. Thus, the output signals, e.g. control signals, are output in an output step 704, where a set of output signals is provided to each of the control objects, e.g. to control behaviour of the control objects, which can be controlled building entities, other building controllers, other building control modules, or the building control module itself. Optionally, in a multiplexing step 701, the input signal sets are multiplexed to provide the building control module with the appropriate signal input set at each instant. Further optionally, in a demultiplexing step 703, the output signal sets are demultiplexed to provide each control object with an appropriate signal output set. Upon performing the method in a controller, features like those demonstrated with reference to any of Figs 2 to 6 will be achieved, in addition to the featurese demonstrated for the method according to the embodiments demonstrated with reference to Fig. 7. Similarly, the method can also include steps for achieving any of the features demonstrated with reference to any of Figs 2 to 6.

Fig. 8 illustrates further options regarding actions, in addition to those demonstrated with reference to Fig. 7, which can be performed according to further embodiments of the present invention. A building control module 800, which has been demonstrated with reference to any of Figs 2 to 6, can optionally be adapted, either prior installation, or when installed and thus performed as maintenance. According to one option, structure of input signals of an input interface 802 can be adapted as an input interface adaption 808. This can comprise adding and/or removing defined input signals of the input interface 802, which is a defined structure for the input signals to fit with corresponding signal interface of input sets. According to another option, structure of output signals of an output interface 804 can be adapted as an output interface adaption 810. This can comprise adding and/or removing defined output signals of the input interface 804, which is a defined structure for the output signals to fit with corresponding signal interface of output sets. According to further another option, structure of variables of an variable interface 806 can be adapted as an variable interface adaption 812. This can comprise adding and/or removing defined variables of the variable interface 806, which is a defined structure for the variables to fit with corresponding signal interface of variable sets. Another option can comprise editing a control mechanism of the building control module 800 in a control mechanism edition 814. Further an option can comprise a certification 816 of the building control module 800. The certification 816 can either comprise assigning a certificate to the building control module 800, e.g. upon checking and/or testing the building control module, or comprise checking an existing certificate of the building control module 800, e.g. upon installation of the building control module 800.

Fig. 9 is a block diagram illustrating a building control module 900 being retrievable from a building control module library 902. The building control module library can comprise a building control module server. Optionally, the building control module library 902 is connected to a maintaining means 904 for maintaining building control modules of the building control module library 902. The maintaining means 904 provides for enabling central adaption of building control modules in the building control module library 902, e.g. according to what is demonstrated above with reference to Fig. 8. Thus, design, editing, or other maintainence of the building control modules is centrally performed, and by using a common building control module, quality of the building control module can be improved without significant increase of effort and thus costs for the aggregate control tasks. Quality can also be improved by the fact that only the common building control module is designed or maintained, and thus is no control task overlooked, e.g. upon updating of the building control module. For example, the above demonstrated assignment of certification of building control modules is preferably performed centrally and under supervision by certain skilled personnel.

Fig. 10 is a block diagram illustrating a building control module 1000 being retrievable from a building control module library 1002, either hosted by a processor 1004, e.g. any of the processors 304, 404, 504, 604 of any of Figs 3 to 6, or accessed remotely via a communication network 1003 by the processor 1004. Thus, the processor 1004 is able to, in addition to controlling operation of the building control module, control retrieval of appropriate building control module. The building control module library 1002 can comprise a building control module server. Optionally, the building control module library 1002 is connected to a maintaining means 1006 for maintaining building control modules of the building control module library 1002. The maintaining means 1006 provides for enabling central adaption of building control modules in the building control module library 1002. Thus, design, editing, or other maintainence of the control mechansisms is centrally performed, and by using a common building control module, quality of the building control module can be improved without significant increase of effort and thus costs for the aggregate control tasks. Quality can also be improved by the fact that only the common building control module is designed or maintained, and thus is no control task overlooked, e.g. upon updating of the building control module. Further, the building control module 1000 which is retrievable from the building control module library 1002 can be a piece of software having a certificate uniquely and/or securely associated with the building control module such that the certificate ensures intended properties of the building control module. This certification can be performed as described in Swedish patent application No. 01000878-3, filed 21 April 2006 at the Swedish Patent Office.

Fig. 11 illustrates a computer readable medium 1100 comprising a computer program for downloading into a controller 1102 for implementing an embodiment of the present invention. The computer program comprises program code which causes a processor of the controller 1102 to perform the method as demonstrated with reference to Figs 7 and/or 8. The controller 1102 is preferably a controller similar to any of the controllers 300, 400, 500, 600 demonstrated with reference to Figs 3 to 6.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A building control module comprising a data structure arranged to define a control mechanism, and at least one of an input interface and an output interface,
wherein said input interface is enabled to receive input signals from any of one or more input sets associated with at least one of a plurality of control objects, said output interface is enabled to provide output signals to any of one or more output sets associated with at least one of a plurality of control objects, and said control mechanism is arranged to process input signals, and to output output signals to said output interface.

2. The module according to claim 1, wherein said output signals comprises control signals for controlling a control object.

3. The module according to claim 1 or 2, wherein said output signals comprises a variable set.

4. The module according to any of claims 1 to 3, wherein said input signals comprises signals provided by a control object.

5. The module according to any of claims 1 to 4, wherein said input signals comprises a variable set.

6. The module according to any of claims 1 to 5, wherein at least one of said input signals are internally generated.

7. The module according to any of claims 1 to 6, wherein at least one of said output signals is connected to said input interface to form an input signal.

8. The module according to any of claims 1 to 7, wherein said data structure is enabled to be updated with regard to any of the group comprising:
addition of input signals to said input interface;
removal of input signals to said input interface;
addition of output signals to said output interface;
removal of output signals from said output interface; and
edition of the control mechanism.

9. A building control controller comprising
a building control module according to any of claims 1 to 8; and
a processor arranged to execute said data structure to control operation of said plurality of control objects by said control mechanism via said interfaces.

10. The controller according to claim 9, being arranged to add further building control modules according to any of claims 1 to 8.

11. The controller according to claim 9 or 10, being arranged to remove building control modules according to any of claims 1 to 8.

12. The controller according to any of claims 9 to 11, being arranged to update building control modules according to any of claims 1 to 8.

13. The controller according to any of claims 9 to 12, further comprising a multiplexer arranged to multiplex signals from said sets of inputs to said input interface of said building control module.

14. The controller according to claim 13, wherein said multiplexer is controlled by said processor.

15. The controller according to any of claims 13 or 14, further comprising a demultiplexer arranged to demultiplex an output signal from said output interface to said sets of outputs.

16. The controller according to claim 15, wherein said demultiplexer is controlled by said processor.

17. The controller according to any of claims 9 to 16, wherein said building control module is retrievable from a central building control module library.

18. The controller according to claim 17, wherein said central building control module library comprises a building control module server.

19. The controller according to claim 17 or 18, wherein said building control module is centrally adaptable in said central building control module library.

20. The controller according to any of claims 17 to 19, wherein said central building control module library is hosted by said processor.

21. The controller according to any of claims 17 to 20, wherein said building control module retrievable from said central building control module library is a software having a certificate uniquely associated to said building control module, said certificate ensuring properties of said building control module.

22. The controller according to claim 21, further comprising means for confirming said building control module by means for verifying said certificate.

23. The controller according to any of claims 9 to 22, wherein one of said control objects comprises another building control module according to any of claims 1 to 8.

24. A building control system comprising
a controller according to any of claims 9 to 23; and
a plurality of control objects, wherein said controller is arranged to control said plurality of control objects.

25. The control system according to claim 24, further comprising a central building control module library.

26. The control system according to claim 25, wherein said central building control module library comprises a building control module server.

27. The control system according to claim 25 or 26, wherein said building control module is centrally adaptable in said central building control module library.

28. The control system according to any of claims 25 to 27, wherein said central building control module library is hosted by a central building management centre of said building control system.

29. A building control method comprising
i) inputting through an input interface one of a plurality of sets of input signals, wherein each set is associated with one of a plurality of control objects;
ii) processing said input signals by a control mechanism to provide output signals;
iii) outputting said output signals through an output interface to one of a plurality of sets of output signals, wherein each set is associated with one of said control objects; and
iv) performing steps i) to iii) for each of said plurality of control objects by said control mechanism.

30. The method according to claim 29, further comprising multiplexing said sets of input signals to said input interface.

31. The method according to claim 29 or 30, further comprising demultiplexing said output signals to said control objects.

32. The method according to any of claims 29 to 31, further comprising retrieving said control mechanism from a central building control module library.

33. The method according to claim 32, further comprising centrally adapting said control mechanism in said central building control module library.

34. The method according to any of claims 29 to 33, further comprising any of the actions comprised in a group comprising;
adding input signals to said input interface;
removing input signals from said input interface;
adding output signals to said output interface;
removing output signals from said output interface; and
editing the control mechanism.

35. A computer program comprising program code means adapted to perform the method according to any of claims 29 to 34 when the program is executed by a processor.
